Europäisches Patentamt

European Patent Office

Office européen des brevets

(11) Veröffentlichungsnummer: **0 150 670**
**A2**

(12) **EUROPÄISCHE PATENTANMELDUNG**

(21) Anmeldenummer: 84810614.2

(22) Anmeldetag: 13.12.84

(51) Int. Cl.⁴: **B 22 D 11/16**

(30) Priorität: 20.12.83 CH 6763/83

(43) Veröffentlichungstag der Anmeldung: 07.08.85
Patentblatt 85/32

(84) Benannte Vertragsstaaten: **AT CH DE FR GB IT LI LU NL SE**

(71) Anmelder: **SCHWEIZERISCHE ALUMINIUM AG, CH-3965 Chippis (CH)**

(72) Erfinder: **Alborghetti, Carlo, De la Plane 19, CH-3960 Sierre (CH)**

(54) Verfahren und Vorrichtung zum Bestimmen und Regeln eines Niveaus einer Metallschmelze.

(57) Bei einem Verfahren zum Bestimmen und Regeln eines Niveaus einer Metallschmelze in einer Giessform, Führungsrinne od. dgl. wird die Grösse von mittels einer Messspule in der Metallschmelze induzierten Wirbelströmen gemessen, welche ein Mass für den Abstand von Messspule zu Metallschmelze ist. Dabei werden die Wirbelströme auf der Metallschmelzeoberfläche dieser induziert, ihre Grösse mit einem Soll-Wert verglichen und nach deren Differenz die Zuflussmenge an Metallschmelze geregelt.

Eine hierzu bestimmte Vorrichtung sieht vor, dass die Messspule (20) über der Metallschmelze angeordnet und mit einer elektronischen Einheit (28) verbunden ist, welche die Messspule (20) mit dem für die Erzeugung der Wirbelströme notwendigen Wechselstrom versorgt und die Grösse der Wirbelströme misst, und dass die elektronische Einheit (28) mit einer Regeleinrichtung (9) zum Vergleich der gemessenen Ist-Werte der Grösse der Wirbelströme mit einem Soll-Wert gekoppelt ist, welche eine Einheit (11) zum Bestimmen der Durchflussmenge an Metallschmelze durch ein Ausflussrohr (2) od. dgl. ansteuert).

Verfahren und Vorrichtung zum Bestimmen und Regeln eines Niveaus einer Metallschmelze

Die Erfindung betrifft ein Verfahren zum Bestimmen und Regeln eines Niveaus einer Metallschmelze in einer Giessform, Führungsrinne od. dgl. durch Messung der Grösse von mittels einer Messspule in der Metallschmelze induzierten Wirbelströmen, welche ein Mass für den Abstand von Messspule zu Metallschmelze ist, sowie eine Vorrichtung hierfür.

Um den heutigen Anforderungen von Metallverarbeitern in bezug auf Metallgefüge und Oberfläche gerecht zu werden, ist es beim Giessprozess unabdingbar, das Metallniveau in der Gussform mit grosser Genauigkeit zu ermitteln. Insbesondere beim Giessen mit elektromagnetischer Kokille hängt die Qualität der Oberfläche direkt von der Stetigkeit des Metallniveaus in der Gussform ab.

Beispielsweise aus der CH-PS 599 541 ist eine Einrichtung zur Ermittlung des Oberflächenpegels von geschmolzenem Metall in einer Stranggiessform mit einem Abfühlorgan bekannt, das einen wärmeempflindlichen magnetischen Körper umfasst, dessen magnetische Eigenschaften sich in Abhängigkeit von der Temperatur verändern und der an einer geeigneten Stelle in der Seitenwand der Stranggiessform angebracht ist. Diese Einrichtung kann beim Giessen mit elektromagnetischer Kokille keine Anwendung finden, da das Abfühlorgan von der elektromagnetischen Kokille selbst unkontrollierbar beeinflusst wird. Weiterhin erscheint die Einrichtung als zu wenig flexibel, da sie immer an der gleichen Stelle in der Giessform angeordnet ist und deshalb eine flexible Handhabung der Messung des Metallpegels unmöglich macht.

Die US-PS 4,160,168 zeigt eine Vorrichtung zur Kontrolle des Pegels eines Metallbades, wobei der Metallstand auf elektro-optischem Wege ermittelt wird. Diese Messmethode ist zu ungenau, da sie unter anderem auch von der Höhe des von der Metallschmelze gebildeten Meniskus abhängt.

Der Erfinder hat sich zum Ziel gesetzt, ein Verfahren und eine Vorrichtung der oben genannten Art zu entwickeln, mittels welchem auf einfache Weise aber dennoch mit höchster Genauigkeit das Niveau einer Metallschmelze gemessen werden kann. Dabei legt er besonderen Wert auf eine flexible Handhabung der gesamten Einrichtung und auf deren von im Arbeitsbereich herrschenden Temperaturschwankungen unbeeinflussten Arbeit.

Zur Lösung dieser Aufgabe führt ein Verfahren der oben genannten Art, bei dem die Wirbelströme auf der Metallschmelzeoberfläche dieser induziert werden, ihre Grösse mit einem Soll-Wert verglichen und nach deren Differenz die Zuflussmenge an Metallschmelze geregelt wird.

Durch dieses Verfahren wird die Ermittlung des Metallschmelzeniveaus weg von der Seitenwand auf die freie Oberfläche der Metallschmelze verlagert. Die Messung ist damit frei von jeglichen Schwankungen in der Meniskusausbildung, welche alle bisher bekannten Verfahren von Messungen des Metallpegels mit Hilfe von Vorrichtungen in der Seitenwand der Kokille beinhalten. Weiterhin vermeidet die Verlagerung der Messung auf die freie Metalloberfläche, insbesondere beim elektromagnetischen Giessen von Aluminium, eine die Genauigkeit der Messung herabsetzende Beeinflussung des Messergebnisses infolge der von den Kokillenwänden ausgehenden magnetischen Strömungen.

Bei einer entsprechenden Vorrichtung zur Durchführung des Verfahrens soll die Messspule über der Metallschmelze angeordnet und mit einer elektronischen Einheit verbunden sein, welche die Messspule mit dem für die Erzeugung der Wirbelströme notwendigen Wechselstrom versorgt und die Grösse der Wirbelströme misst, wobei die elektronische Einheit mit einer Regeleinrichtung zum Vergleich der gemessenen Ist-Werte der Grösse der Wirbelströme mit einem Soll-Wert gekoppelt ist, welche eine Einheit zum Bestimmen der Durchflussmenge an Metallschmelze durch ein Ausflussrohr od. dgl. ansteuert. Dabei soll sich die Messspule bevorzugt an einer Sohle eines in einem Gehäuse auf einer Traverse über der Metallschmelze gelagerten Führungsrohres befinden und von einer Haube aus hitzebeständigem Material geschützt sein. Diese letztere Haube kann beispielsweise aus Teflon bestehen. Da sich die elektronische Einheit ebenfalls innerhalb des Gehäuses befindet, kann sie auf einfache Weise mittels eines HF-Kabels durch das Führungsrohr hindurch mit der Messspule verbunden sein. Das Gehäuse selbst sitzt auf der Traverse, wobei zwischen Gehäuse und Traverse eine zusätzliche Isolationsschicht angeordnet ist.

Es besteht beispielsweise aus Aluminium und ist im inneren mit einer Isolation ausgekleidet. In Gebrauchslage durchsetzt das Führungsrohr die Traverse.

Das Führungsrohr, an welchem die Messspule festliegt, soll nach einem besonderen Merkmal der Erfindung höhenveränderlich sein. Dies kann auf einfache Weise dadurch bewirkt werden, dass ein von der Gehäuseaussenseite her zugänglicher Stift in eine Bohrung im Führungsrohr einsetzbar ist, wobei das Führungsrohr entlang seiner Längsachse eine Vielzahl solcher Bohrungen aufweist. In der Praxis hat sich gezeigt, dass die Messung des Metallniveaus am optimalsten bei einem Abstand von ca. 20 mm vom Messkopf zur Metallschmelze ist. Demnach sollte dieser Wert als Sollwert für die nachfolgende Regeleinrichtung genommen werden. Eine dementsprechende Eichung erfolgt bevorzugt vor dem Anbringen des Niveaumessgerätes auf der Traverse durch Messung von in eine stationäre Metallplatte induzierten Wirbelströme. Sollte im Nachhinein ein Absenken des Metallniveaus erforderlich werden, kann diesem mit der Messspule durch ein Absenken des Führungsrohres gefolgt werden. Damit ist das Niveaumessgerät ausserordentlich anpassungsfähig an gewünschte Aenderungen. Selbstverständlich ist auch denkbar, dass das Führungsrohr im Gehäuse festliegt und das Gehäuse insgesamt mit der Traverse angehoben oder abgesenkt wird.

Da im Arbeitsbereich des Niveaumessgerätes ausserordentlich hohe Temperaturen herrschen, soll erfindungsgemäss der Innenraum oder auch der von der Teflonhaube umschlossene Raum um die Messspule herum mittels eines Kühlmediums gekühlt werden. Hierfür kommt in erster Linie Luft in Frage.

Verändert sich beispielsweise während des Giessens das Metallniveau, so kommt es zu Impedanzschwankungen in der Messspule, da sich die im Messobjekt induzierten Wirbelströme als ohmsche Verluste niederschlagen. Der Wert dieser Impedanzschwankungen gelangt über die elektronische Einheit zu einer Regeleinrichtung, wo er mit dem oben genannten Sollwert verglichen wird. Im Hinblick auf eine Differenz zwischen dem Ist-Wert und dem Soll-Wert steuert diese Regeleinrichtung wiederum die Einheit zum Bestimmen der Durchflussmenge an Metallschmelze durch ein Ausflussrohr od. dgl. an. Im Falle einer Differenz wird ein Schrittmotor angeregt, welcher eine Gewindespindel antreibt, an der über einen Arm verbunden ein Stöpsel hängt. Mittels dieses Stöpsels kann ein Durchlass in dem Ausflussrohr querschnittlich verändert und die Metallzufuhr erhöht oder gedrosselt werden.

Die gesamte Vorrichtung ist sehr wenig störungsanfällig und arbeitet mit hoher Genauigkeit.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1     eine teilweise geschnittene perspektivische Darstellung einer Vorrichtung zum Steuern eines Metallschmelzeflusses;

Fig. 2     einen vergrösserten Querschnitt durch ein Niveaumessgerät der Vorrichtung nach Fig. 1.

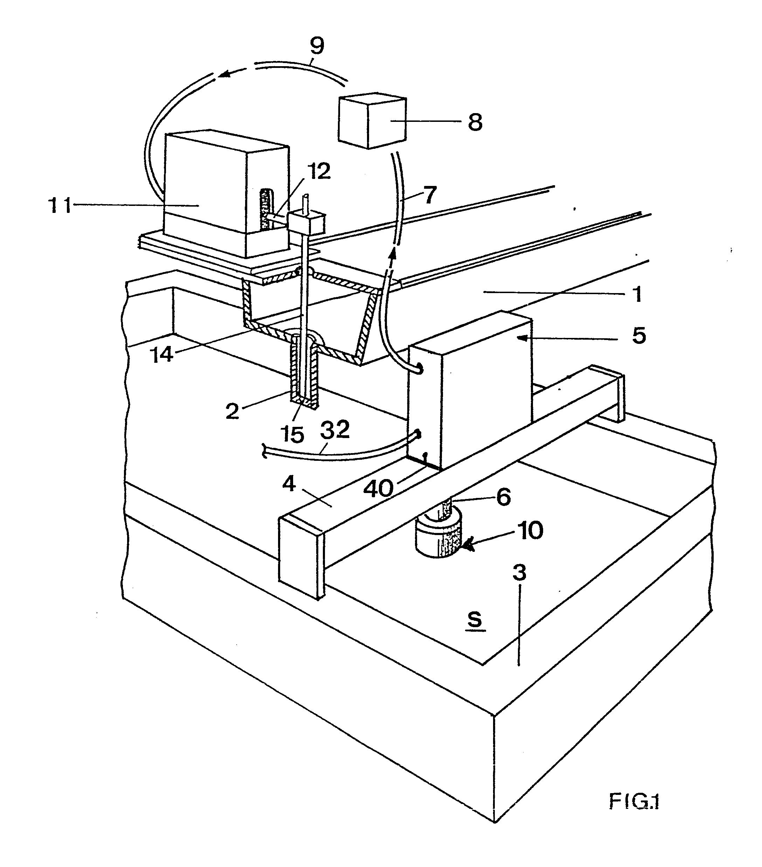

Fig. 1 zeigt eine Rinne 1 mit Austragsrohr 2 zum Zuführen einer Metallschmelze S in eine Gießform oder Kokille 3.

Eine die Kokille 3 überspannende Traverse 4 trägt -- unter Zwischenschaltung einer Isolierschicht $40_a$ -- ein Niveaumeßgerät 5 und ist vom Führungsrohr 6 eines Sensors 10 des Niveaumeßgerätes 5 durchsetzt. Letzteres ist durch eine Leitung 7 mit einer Regeleinrichtung 8 verbunden und diese über eine weitere Leitung 9 mit einer Einheit 11 zum Bestimmen der Durchflußmenge an Metallschmelze S durch jenes Austragsrohr 2; an einem Arm 12 der Einheit 11 ist ein Stab 14 angelenkt, welcher mit einer Spitze den Querschnitt einer Durchlaßöffnung 15 im Austragsrohr 2 verändern kann.

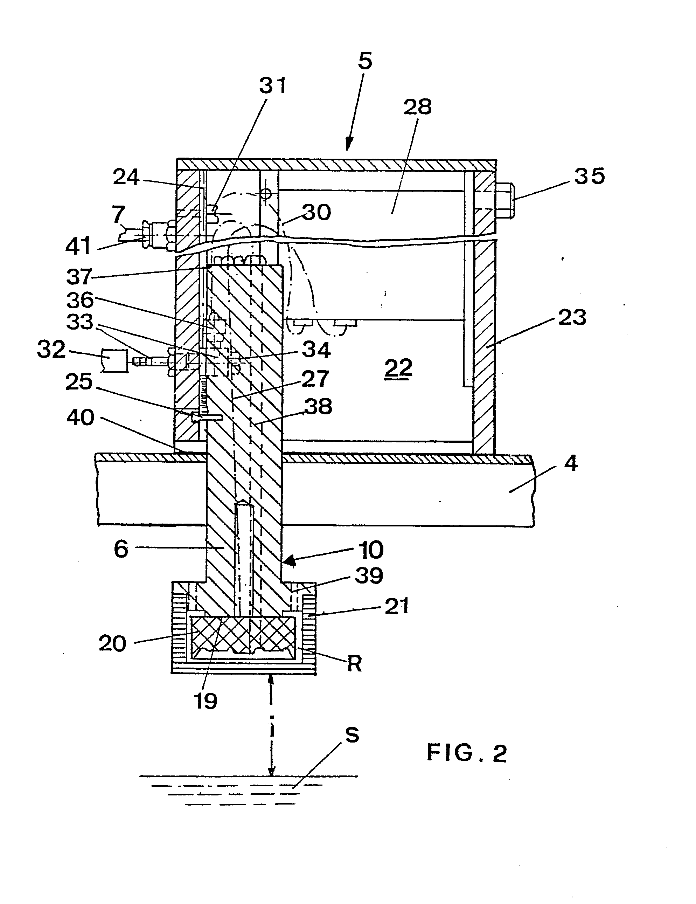

Gemäß Fig. 2 liegt an der Sohle 19 des Führungsrohrs 6 eine induktive Meßspule 20 fest, die unter Bildung eines Sohlenraumes R von einer isolierenden Teflonhaube 21 abgedeckt ist. Nach oben hin ragt das Führungsrohr 6 in ein beispielsweise aus Aluminium mit Innenisolation 24 bestehendes Gehäuse 23 des Niveaumeßgerätes 5 ein und wird darin von einem von außen her zugänglichen Stift 25 gehalten. Mit dessen Hilfe kann ein gewünschter Abstand i des Sensors 10 vom Spiegel der Metallschmelze S eingestellt werden, wozu das Führungsrohr 6 entlang seiner Längsachse nicht dargestellte Bohrungen in bestimmten Abständen zueinander als Stecklöcher für den Stift 25 aufweist.

Die Meßspule 20 verbindet ein durch das Führungsrohr 6 hindurchgehendes -- strichpunktiert angedeutetes -- HF-Kabel 27 mit einer elektronischen Einheit 28, deren Bestandteile nicht näher gezeigt sind. Durch sie wird
die Meßspule 20 mit einem Wechselstrom höherer Frequenz
beschickt; dieser induziert Wirbelströme innerhalb der
Metallschmelze S. Die Größe der in der Meßspule induzierten Wirbelströme ist abhängig vom Abstand i zwischen Meßspule 20 und Metallschmelze S sowie ein Maß
für den Abstand der induktiv gekoppelten Elemente voneinander; d. h. ein demodulierter, linearisierter und
verstärkter Wechsel einer Impedanz in der Meßspule 20
bewirkt eine Spannungsschwankung, die direkt proportional
zu der Veränderung des Abstandes i zwischen Schmelze
und Meßspule 20 ist.

Ein so erfaßtes Signal wird über eine strichpunktierte
Leitung 30 zu einer Klemmleiste 31 geführt, an welche
jene Leitung 7 mittels eines Steckers 41 angeschlossen
ist.

Zur Kühlung des ganzen Systems wird ein Schlauch 32 mit
einem Schlauchanschluß 33 verbunden sowie Luft oder ein
anderes Kühlmedium durch eine Düse 34 in den Innenraum
22 des Gehäuses 23 eingeblasen, aus dem die Luft od. dgl.
wieder durch einen Luftfilter 35 entweichen kann.

Dank einer Querschnittsverengung od. dgl. an der Düse 34
wird auch Luft durch eine weitere, abzweigende Düse 36,
ein Schlauchstück 37, einen gestrichelt angedeuteten
Kanal 38 im Führungsrohr 6 und die Meßspule 20 hindurch
in den Sohlenraum R geführt, aus dem sie durch Bohrungen
39 wieder entweichen kann.

Das Signal aus der elektronischen Einheit 28 gelangt
durch die Leitung 7 zur Regeleinrichtung 8 und wird dort in ein Steuersignal für die Einheit 11 zum Bestimmen der Durchflußmenge an Metallschmelze S umgewandelt. Hierdurch wird in der Einheit 11 ein Schrittmotor in Gang gesetzt, der über eine Gewindespindel den Arm 12 mit dem Stab 14 nach oben oder unten bewegt; der Querschnitt der Durchlaßöffnung 15 wird hierdurch verändert, letzterer gegebenenfalls geöffnet oder geschlossen.

PATENTANSPRÜCHE
================================

1. Verfahren zur Niveauüberwachung einer durch ein Austragsrohr od. dgl. zugeführten Metallschmelze in einer Gießform, Führungsrinne od. dgl. durch Messung
   von mittels einer Meßspule in der Metallschmelze
   induzierten Wirbelströmen als Maß des Abstandes der
   Meßspule von der Metallschmelze, wobei die Größe der
   Wirbelströme auf der Metallschmelzeoberfläche mit
   einem Soll-Wert verglichen wird,

   dadurch gekennzeichnet,

   daß nach der Differenz zwischen Soll- und Ist-Wert
   die Zuflußmenge an Metallschmelze geregelt wird.

2. Verfahren nach Anspruch 1, dadurch gekennzeichnet,
   daß mittels eines demodulierten, linearisierten
   und verstärkten Wechsel einer Impedanz in der Meßspule eine Spannungsschwankung erzeugt wird, die
   dicht proportional zur Veränderung des Abstandes
   zwischen Metallschmelze und Meßspule ist.

3. Vorrichtung zur Niveauüberwachung einer durch ein
   Austragsrohr od. dgl. zugeführten Metallschmelze in
   einer Gießform, Führungsrinne od. dgl. durch Messung
   von mittels einer Meßspule in der Metallschmelze
   induzierten Wirbelströmen als Maß des Abstandes der
   Meßspule von der Metallschmelze, wobei die Meßspule über der Metallschmelze angeordnet und mit
   einer elektronischen Überwachungseinheit verbunden ist, dadurch gekennzeichnet, daß eine elektronische Einheit (28) mit einer Regeleinrichtung (8) zum Vergleich der gemessenen Ist-Werte der Größe der Wirbelströme mit einem Soll-Wert gekoppelt ist, mit der über eine Einheit (11) zum Bestimmen der Durchflußmenge an Metallschmelze (S) der Querschnitt einer Durchlaßöffnung (15) des Austragsrohres (2) veränderbar ist.

4. Vorrichtung nach Anspruch 3, dadurch gekennzeichnet, daß die Meßspule (20) an einer Sohle (19) eines in einem Gehäuse (23) über der Metallschmelze (S) gelagerten Führungsrohres (6) angebracht und von einer Haube (21) aus hitzebeständigem Werkstoff geschützt ist.

5. Vorrichtung nach Anspruch 4, gekennzeichnet durch einen mittels Bohrungen (39) mit der Atmosphäre verbundenen, die Meßspule (20) aufnehmenden Sohlenraum (R).

6. Vorrichtung nach Anspruch 4 oder 5, dadurch gekennzeichnet, daß das Führungsrohr (6) höhenveränderlich am Gehäuse (23) angeordnet ist.

7. Vorrichtung nach einem der Ansprüche 3 bis 6, dadurch gekennzeichnet, daß das isolierte Gehäuse (23) auf eine Traverse (4) unter Zwischenschaltung einer Isolierschicht vorgesehen ist.

8. Vorrichtung nach einem der Ansprüche 3 bis 7, dadurch gekennzeichnet, daß ein Innenraum (22) des Gehäuses (23) und/oder der Sohlenraum (R) von einem Kühlmedium beaufschlagt ist.

9. Vorrichtung nach wenigstens einem der Ansprüche 3 bis 8, dadurch gekennzeichnet, daß die Einheit (11) einen Schrittmotor mit von ihm betätigter Gewindespindel aufweist, die einen Arm (12) sowie einen daran angelenkten und axial verschieblichen Stab (14) betätigt, der in dem Querschnitt der Durchlaßöffnung (15) des Austragsrohres (2) einbringbar ist.

10. Anwendung eines Verfahrens nach Anspruch 1 oder 2 bzw. Verwendung einer Vorrichtung nach wenigstens einem der Ansprüche 3 bis 9 zum Gießen von Aluminium mit elektromagnetischer Kokille.

0150670

FIG.1

FIG. 2